# EUROPÄISCHE PATENTSCHRIFT

(11) **EP 1 332 064 B1**
(45) Veröffentlichungstag und Bekanntmachung des Hinweises auf die Patenterteilung: **05.04.2006**
(21) Anmeldenummer: 01992655.9
(22) Anmeldetag: 05.10.2001
(51) Int. Cl.: B60K 15/035

(54) **KRAFTSTOFFBEHÄLTER**
FUEL TANK
RESERVOIR DE CARBURANT

(30) Priorität: 06.11.2000 DE 10054874
(43) Veröffentlichungstag der Anmeldung: 06.08.2003
(73) Patentinhaber: Kautex Maschinenbau GmbH, 53229 Bonn (DE)
(72) Erfinder: BALZER, Martin, 53757 Sankt Augustin (DE); FRIEDRICHS, Karsten, 53604 Bad Honnef (DE); DAUBENBÜCHEL, Werner, 51491 Overath (DE); WEILAND, Olaf, 20249 Hamburg (DE); KLÜSENER, Peter, 53179 Bonn (DE)
(74) Vertreter: Kierdorf, Theodor
(86) Internationale Anmeldenummer: PCT/DE2001/003823
(87) Internationale Veröffentlichungsnummer: WO 2002/036381

(56) Entgegenhaltungen:
- DE-A- 19 853 097
- DE-A- 19 909 041

## Beschreibung

Die Erfindung betrifft einen Kraftstoffbehälter aus Kunststoff, insbesondere einen Kfz-Tank aus Kunststoff, mit einer oder mehreren Schweißnähten als Nahtstellen des Behälterkörpers und/oder als Verbindungs- oder Dichtungsnähte zwischen der Behälterwandung im Bereich von Öffnungen und mit dieser verschweißten Deckeln oder Anschlusselementen.

Derartige Kraftstoffbehälter als Kfz-Tanks, die im wesentlichen aus Polyethylen bestehen, sind in verschiedensten Varianten bekannt, ebenso ist bekannt, dass solche Kraftstoffbehälter aus Kunststoff mehr oder weniger für Kohlenwasserstoffe permeabel sind. Bei einschichtigen Behältern aus Polyethylen können Kohlenwasserstoffe ohne weiteres durch die Wandung der Behälter diffundieren.

Eine gegenüber einschichtigen Kraftstoffbehältern aus Polyethylen deutlich verringerte Permeabilität wird mit Kraftstoffbehältern erzielt, die einen mehrschichtigen Wandaufbau mit diffusionsdichten Barriereschichten aufweisen. Solche Behälter werden überwiegend durch Extrusionsblasformen hergestellt. Auch solche Tanks bzw. Behälter sind nicht vollständig gasdicht. Probleme bereiten bei diesen Tanks Anschlusselemente wie Ventile und Nippel sowie die Schweißnähte, durch welche Kohlenwasserstoffe diffundieren können, da die Barriereschichten im Bereich der Schweißnähte nicht unmittelbar miteinander verschweißt sind sondern in sehr dünnen Restschichten durch Material getrennt sind, das wenig Barrierewirkung besitzt.

Dieses Problem ist bereits in der WO 00/48859 angesprochen. Zur Lösung dieses Problems wird dort vorgeschlagen, einen Kraftstofftank mit einer haubenförmigen Abdeckung zu versehen, die zwischen sich und der äußeren Tankwandung einen als Kraftstoffdampfsammelkammer ausgebildeten Hohlraum bildet, der die Nähte des Tanks sowie diverse Anschlussöffnungen und Deckel einschließt. Diese Abdeckung ist mit der Tankaußenwandung verschweißt. Eine solche Lösung ist außerordentlich aufwendig, darüber hinaus können bei einer solchen Konstruktion Kohlenwasserstoffe durch die Schweißnähte der Haube an die Umwelt abgegeben werden.

Aus der DE 198 53 097 A1 ist beispielsweise ein aus zwei Hälften zusammengesetzter Kraftstoffbehälter bekannt, der eine im Spritzgussverfahren aus Kunststoff hergestellte Wandung aufweist, wobei jede Hälfte des Tanks wiederum aus übereinander angeordneten Schalen besteht, zwischen denen ein Schlitz oder Spalt freigehalten ist, wobei in diesen Spalt eingetretene Kraftstoffdämpfe abgeführt und gefiltert werden. Auch bei einer solchen Konstruktion stellen die Schweißnähte des Tanks potentielle Schwachstellen dar.

Der Erfindung liegt daher die Aufgabe zugrunde, einen Kraftstoffbehälter der eingangs genannte Art derart zu verbessern, dass dieser möglichst wenig Kraftstoffdämpfe an die Umgebung abgibt.

Das der Erfindung zugrundeliegende Problem wird dadurch gelöst, dass zumindest einige der Schweißnähte zumindest teilweise mit einem sich in deren Längsrichtung erstreckenden Kanal durchsetzt sind, der be- und entlüftbar ist.

Die Erfindung geht davon aus, dass eine vollständige Abdichtung der Schweißnähte nur mit außerordentlich hohem konstruktiven Aufwand erzielbar ist, wohingegen eine Belüftung bzw. Ventilierung der Schweißnähte durch einen diesen durchsetzenden Kanal mit besonders einfachen Mitteln realisierbar ist.

Der Kanal kann vorzugsweise jeweils endseitig Anschlüsse zur Be- und Entlüftung aufweisen.

Beispielsweise können die Anschlüsse mit Be- oder Entlüftungsventilen versehen sein.

Bei einem Kraftstoffbehälter der durch Extrusionsblasformen eines mehrschichtigen Vorformlings erhalten wurde, kann vorgesehen sein, dass der Kanal durch Ausnehmungen in den Rändern der Blasform erzeugt wurde.

Bei einem aus zwei miteinander verschweißten Halbschalen hergestellten Kraftstoffbehälter, bei dem die Halbschalen jeweils an Verbindungsflanschen miteinander verschweißt sind, können in den Verbindungsflanschen jeweils wenigstens einen Kanal bildende nutförmige Ausnehmungen vorgesehen sein.

Alternativ hierzu kann der Kraftstoffbehälter aus zwei stirnseitig miteinander verschweißten Halbschalen gebildet werden, wobei wenigstens ein Kanal zwischen zwei umlaufenden Absätzen der Halbschalen freigehalten ist.

Die Nahtstelle des Behälterkörpers kann jeweils abschnittsweise mit einem Kanal durchsetzt sein, wobei mehrere Kanalabschnitte mit einer gemeinsamen Entlüftungsleitung kommunizieren können. Die Entlüftung wenigstens eines Kanals kann über ein Filterelement erfolgen, vorzugsweise über einen dem Kraftstoffbehälter ohnehin zugeordneten Aktivkohlefilter.

Schließlich können Mittel zur Druckbelüftung wenigstens eines Kanals vorgesehen sein. Die so in den Kanal eingebrachte Spülluft kann zum Verbrennungsmotor oder zu dem in einem Kfz ohnehin vorhandenen Aktivkohlefilter geführt werden. Die Ventilation der Kanäle kann sowohl durch Unterdruck als auch durch Überdruck erfolgen.

Es wird allerdings davon ausgegangen, dass sich bereits aufgrund des Konzentrationsgefälles der Kohlenwasserstoffdämpfe in einem erfindungsgemäßen Kanal eine Belüftung selbsttätig einstellen wird, wenn dieser Kanal beispielsweise an ein Filterelement angeschlossen ist.

Die Erfindung wird nachstehend anhand mehrerer in den Zeichnungen dargestellten Ausführungsbeispiele erläutert.

Es zeigen:
- Fig. 1: eine perspektivische Ansicht eines Kunststoff-Kraftstoffbehälters als Kfz-Tank,
- Fig. 2: eine vergrößerte Ansicht einer Schweißnaht an einem blasgeformten Kunststoff-Kraftstoffbehälter, die in bekannter Art und Weise ausgeführt ist und den Stand der Technik repräsentiert,
- Fig. 3: einen vergrößerten Ausschnitt der in Fig. 2 dargestellten Wandung des Kraftstoffbehälters,
- Fig. 4: einen Schnitt durch einen Kraftstoffbehälter nach einem ersten Ausführungsbeispiel der Erfindung im Bereich der Schweißnaht.
- Fig. 5: eine vereinfachte Ansicht auf die in Fig. 4 dargestellte Schweißnaht,
- Fig. 6: einen Teilschnitt durch eine Blasform, der die Herstellung eines Kraftstoffbehälters nach dem ersten Ausführungsbeispiel der Erfindung verdeutlicht,
- Fig. 7: einen vergrößerten Schnitt durch die Wandung eines Kraftstoffbehälters nach einem zweiten Ausführungsbeispiel der Erfindung im Bereich der Schweißnaht, wobei dieser Kraftstoffbehälter aus zwei Halbschalen zusammengesetzt ist,
- Fig. 8 bis 11: verschiedene Ausgestaltungen der Verbindung zweier Halbschalen zu einem Kraftstoffbehälter und
- Fig. 12 und 13: vergrößerte Schnittansichten der Wandung eines Kraftstoffbehälters im Bereich von mit Deckeln verschweißten Öffnungen.

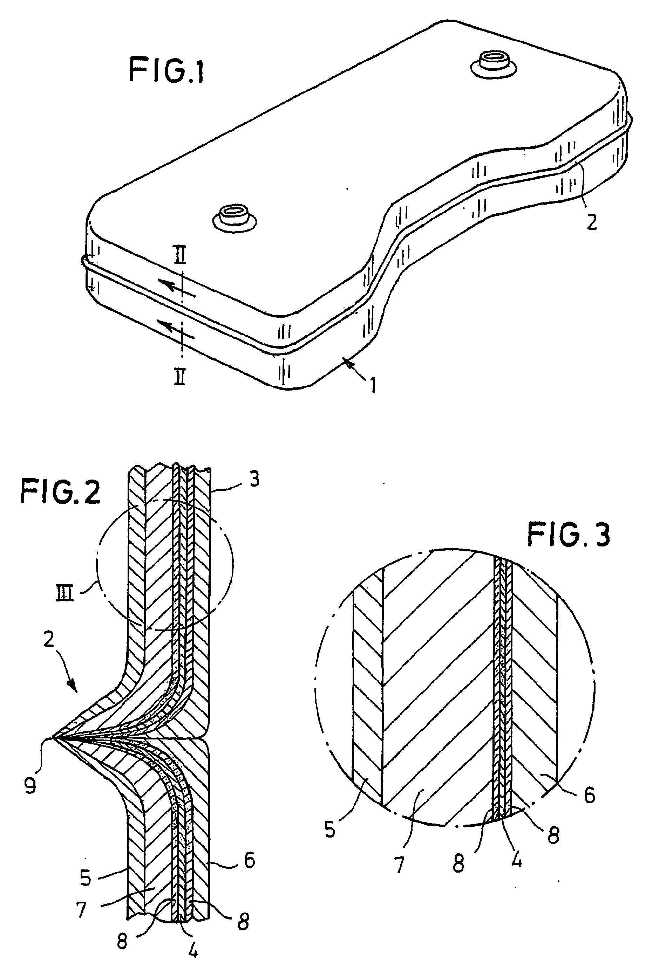

In Fig. 1 ist eine stark vereinfachte perspektivische Ansicht eines Kraftstoffbehälters 1 aus Kunststoff dargestellt, der eine umlaufende Schweißnaht 2 aufweist. Dieser Kraftstoffbehälter 1 ist bevorzugt als extrusionsblasgeformtes Hohlformteil mit einer mehrschichtigen Behälterwandung 3 ausgebildet, die in bekannter Art und Weise einen sechsschichtigen Aufbau mit einer innenliegenden Barriereschicht 4 für Kohlenwasserstoffe besitzt.

Es sei an dieser Stelle erwähnt, dass die Erfindung ausdrücklich auch Kraftstoffbehälter betrifft, die aus zwei Halbschalen in der zweiten Wärme miteinander verschweißt wurden. Ob die miteinander zu verschweißenden Kunststoffteile einen einschichtigen oder mehrschichtigen Aufbau besitzen, ist für die Erfindung nur insoweit von Bedeutung, als dass das Problem der Schweißnähte als potentielle Diffusions-Schwachstellen des Kraftstoffbehälters besonders bei Kraftstoffbehältern mit mehrschichtig aufgebauten Wandungen ins Gewicht fällt.

Diese Problematik wird nachstehend anhand der Fig. 2 und 3 erläutert, wobei die Fig. 2 eine Behälterwandung 3 mit einer Schweißnaht 2 nach dem Stand der Technik zeigt.

Fig. 3 zeigt einen vergrößerten Ausschnitt aus der Behälterwandung 3 in Fig. 2, aus welchem der typische Aufbau einer mehrschichtigen Behälterwandung 3 eines durch Extrusionsblasformen hergestellten Kunststoffbehälters ersichtlich ist. Die mit 5 bezeichnete Außenschicht sowie die mit 6 bezeichnete Innenschicht bestehen aus Polyethylen, wobei die Außenschicht gegebenenfalls dunkel eingefärbt ist, wobei die Außenschicht 5 eine Schichtdicke von ca. 10 bis 15 % der Gesamtstärke der Behälterwandung aufweist und die Innenschicht als tragende Schicht eine Stärke von ca. 20 % aufweist. Mit 7 ist eine Schicht aus Regenerat bezeichnet, d. h. aufbereitetem Abfallmaterial, das in der Regel aus einer Mischung aller die Behälterwandung 3 bildender Materialien besteht. Die Barriereschicht 4 ist unter Zwischenlage von Haftvermittlerschichten 8 zwischen dem Regenerat 7 und der Innenschicht 6 eingebettet.

Bei Herstellung eines so aufgebauten Kraftstoffbehälters 1 durch Extrusionsblasformen entsteht naturgemäß durch Abquetschen des schlauchförmigen Vorformlings eine mehr oder minder große, unter Umständen vollständig umlaufende Schweißnaht 2 derart, wie sie in Fig. 2 dargestellt ist. Wie aus der Figur unschwer zu ersehen ist, liegen dabei naturgemäß die Innenschichten 6 der Behälterwandung 3 aufeinander. Im Bereich der Abquetschstelle werden alle Schichten ineinander übergehen, jedoch werden über weite Teile der Schweißverbindung nur die Innenschichten 6 benachbarter Wandungsbereiche aufeinanderliegen, wenn auch in geringer Reststärke. Diese Restschichten besitzen wenig Barrierewirkung gegen Kohlenwasserstoffe, so dass folglich noch ein geringfügiger Anteil von Kohlenwasserstoffen durch die Schweißnaht 2 diffundieren kann.

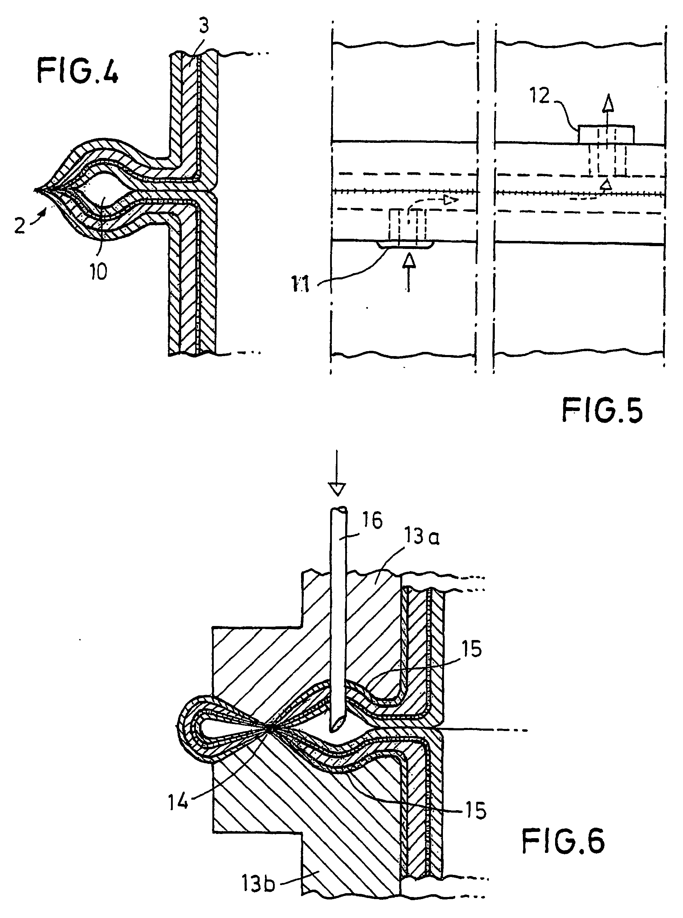

Die Erfindung sieht daher die in Fig. 4 dargestellte Ausbildung der Schweißnaht 2 vor, die so ausgebildet ist, dass diese in ihrer Längserstreckung von einem Kanal 10 durchsetzt wird, der be- und entlüftbar ausgebildet ist. Kohlenwasserstoffe die von der Innenseite des Kraftstoffbehälters 1 durch die miteinander verschweißten Innenschichten 6 und zwischen den Barriereschichten 4 hindurchdiffundieren, treten aufgrund des niedrigeren Partialdrucks in dem Kanal in letzteren ein.

In den Zeichnungen der Ausführungsbeispiele ist der Wandaufbau des Kraftstoffbehälters vereinfacht dargestellt, dieser soll dem in Fig. 3 dargestellten Aufbau etwa entsprechen.

Wie dies in Fig. 5 schematisch dargestellt ist, ist der Kanal 10 jeweils endseitig mit einem Belüftungsanschluss 11 und einem Entlüftungsanschluss 12 versehen. Aufgrund eines Konzentrationsgefälles in dem Kanal 10 zu einem Filterelement werden Kraftstoffdämpfe zwangsläufig durch den Kanal 10 hindurchströmen und aus diesem in das Filterelement austreten. Der Kanal 10 kann allerdings auch gezielt mit Luft gespült bzw. ventiliert werden, und zwar entweder durch Anlegen von Unterdruck oder durch Beaufschlagung mit Druck. Die Spülluft muss nicht notwendigerweise einem Filterelement zugeführt werden, vielmehr kann diese auch der Verbrennungsluft für den Motor zugeführt werden.

Die hierzu vorgesehenen Belüftungs- und Entlüftungsanschlüsse 11, 12 können bei der Herstellung des Kraftstoffbehälters 1 mit eingeformt worden sein.

Fig. 6 veranschaulicht schematisch die Herstellung eines Kraftstoffbehälters 1 gemäß der Erfindung durch Extrusionsblasen. Mit 13a und 13b sind in Fig. 6 die beiden Formhälften einer Blasform im geschlossenen Zustand dargestellt, deren Schneidkanten 14 das aus der Form überstehende Material des bereits unter Überdruck aufgeweiteten Formlings unter Bildung der Schweißnaht 2 abtrennen. Wie dies der Fig. 6 zu entnehmen ist, sind die Ränder bzw. die Quetschkanten der Formhälften 13a, b jeweils mit einer halbkreisförmigen, umlaufenden Nut 15 versehen, die bei geschlossenen Formhälften 13a, b eine kanalförmige Ausnehmung bilden. Um sicherzustellen, dass der Kanal 10 frei bleibt und die Behälterwandungen in diesem Bereich nicht miteinander verschweißen, sind in Längsrichtung der Schweißnaht 2 (in Fig. 6 in die Zeichnungsebene hinein) gegebenenfalls mehrere abstandsweise hintereinander angeordnete Blasnadeln 16 vorgesehen, beispielsweise am Anfang und am Ende des Kanals, die in die durch die Nuten 15 gebildete Ausnehmung hineinreichen und über die mittels Blasluft die Ausformung des Kanals 10 bewirkt wird.

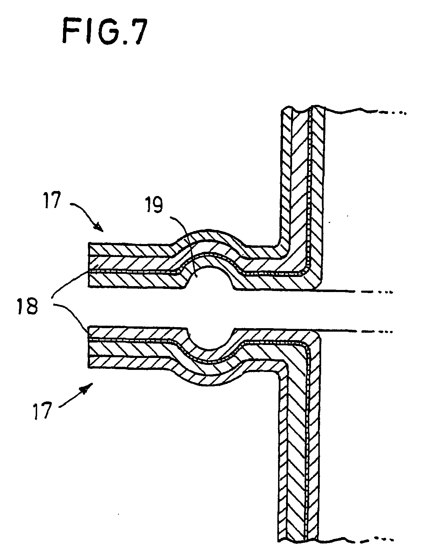

In Fig. 7 ist schematisch eine Verbindung eines Kraftstoffbehälters 1 aus zwei vorgefertigten, jeweils mehrschichtigen aufgebauten Halbschalen 17 dargestellt, wobei die miteinander zu verschweißenden Bereiche jeweils als umlaufender, flanschartiger Kragen ausgebildet sind. Durch die in den Kragen 18 vorgesehenen Rinnen 19 wird nach der Verschweißung der beiden Halbschalen 17 ebenfalls ein Kanal 10 der zuvor beschriebenen Art gebildet.

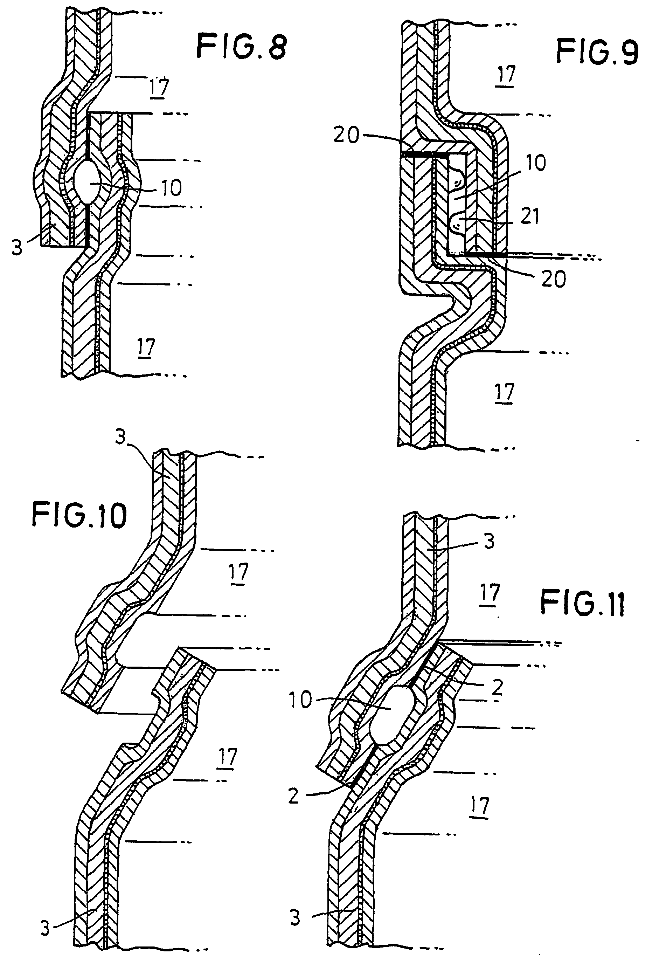

In den Fig. 8 bis 11 sind verschiedene Varianten der Behälterwandungen 3 bei Verschweißung zweier Halbschalen 17 miteinander zu einem Kraftstoffbehälter 1 dargestellt. Bei der in Fig. 8 dargestellten Variante der Ausgestaltung der Behälterwandung 3 im Bereich der Schweißnaht 2 ist jeweils die Innenwandung der ersten Halbschale 17 (in der Zeichnung der oberen Halbschale) mit der Außenwandung der zweiten Halbschale 17 zwischen sich den Kanal 10 bildend verschweißt. Bei dieser Ausgestaltung der Verbindung zwischen den Halbschalen 17 kann bei der Herstellung der Verbindung behälterinnenseitig Druck auf die Schweißnaht 2 ausgeübt werden, beispielsweise mittels eines gasförmigen Mediums.

Bei der in Fig. 9 dargestellten Verbindung sind die Behälterwandungen 3 jeweils einen Absatz 20 bildend stirnseitig miteinander verschweißt. Zur Zentrierung der Halbschalen 17 zueinander und zur Freihaltung des Kanals 10 sind als Abstandshalter jeweils Noppen 21 innenseitig und außenseitig an den den Kanal 10 bildenden Wandungsbereichen der Halbschalen 17 vorgesehen. Die Noppen 21 sind jeweils in Reihen angeordnet, die sich in Längsrichtung der Schweißnaht 2 (in die Zeichnungsebene hinein) erstrecken.

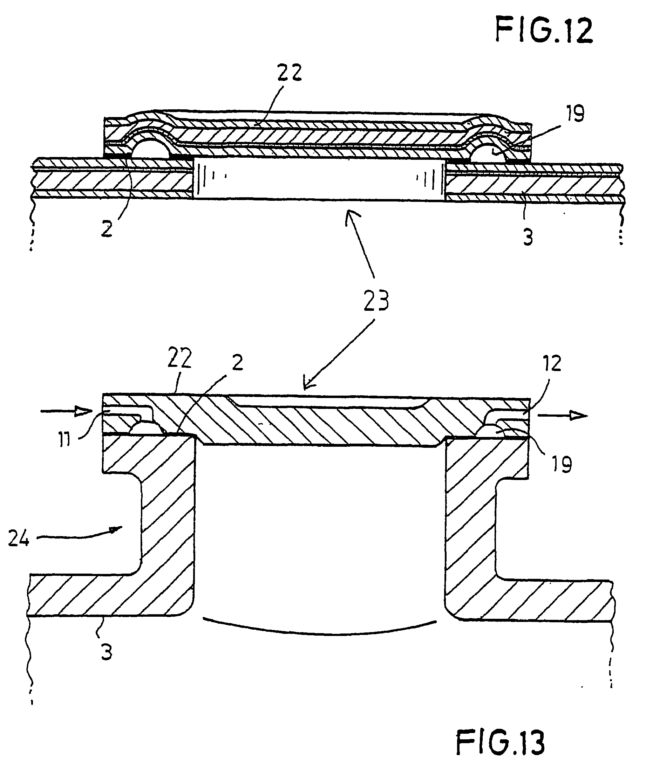

Bei der in den Fig. 10 und 11 dargestellten Verbindung der Halbschalen 17 ist eine Halbschale 17 in Richtung auf ihre Öffnung sich konisch erweiternd ausgebildet, wohingegen die andere Halbschale 17 sich komplementär hierzu konisch verjüngend ausgebildet ist, woraus sich eine Winkelstellung der Schweißnaht 2 bzw. der Schweißnähte 2 ergibt, die Formungenauigkeiten ausgleicht und bei der durch Zusammenfügen der Halbschalen 17 die Pressung auf die Schweißnaht 2 ausgeübt wird.

Im vorstehenden Text ist an entsprechenden Stellen jeweils nur von einer Schweißnaht die Rede, worunter aber auch zwei voneinander abliegende, durch den Kanal 10 getrennte Schweißnähte zu verstehen sein sollen.

In den Fig. 12 und 13 ist schließlich jeweils die Verschweißung eines mehrschichtigen Deckels 22 mit wenigstens einer in diesen eingebetteten Barriereschicht 4 mit der Behälterwandung 3 im Bereich einer Öffnung 23 dargestellt. In dem Deckel 22 ist jeweils auf dessen Innenseite, d. h. auf dessen der Behälterwandung 3 zugekehrten Seite randseitig umlaufend eine im Querschnitt halbkreisförmige Rinne 19 vorgesehen, die einen ebenfalls im Querschnitt halbkreisförmigen Kanal bildet. Eine entsprechende Rinne in der Behälterwandung 3 ist nicht vorgesehen, da dies nicht unbedingt erforderlich ist und nur eine unnötige Schwächung der Behälterwandung 3 in diesem Bereich darstellen würde. Entsprechend könnte selbstverständlich auch der Kanal bei den Ausführungsbeispielen gemäß Fig. 7, 8, 10 und 11 ausgebildet sein. Fig. 13 zeigt die Verschweißung eines Deckels im Bereich einer Öffnung 23, wo die Behälterwandung 3 einen Deckelflansch 24 ausbildet. In dieser Figur sind jeweils ein mit dem Kanal 10 kommunizierender Belüftungsanschluss 11 und ein Entlüftungsanschluss 12 dargestellt, die auch bei dem in Fig. 12 gezeigten Ausführungsbeispiel vorgesehen, jedoch nicht eingezeichnet sind.

### Bezugzeichenliste

- 1: Kraftstoffbehälter
- 2: Schweißnaht
- 3: Behälterwandung
- 4: Barriereschicht
- 5: Außenschicht
- 6: Innenschicht
- 7: Regenrat
- 8: Haftvermittlerschichten
- 9: Abquetschstellen
- 10: Kanal
- 11: Belüftungsanschluss
- 12: Entlüftungsanschluss
- 13a, b: Formhälften
- 14: Schneidkanten
- 15: Nut
- 16: Blasnadel
- 17: Halbschalen
- 18: Kragen
- 19: Rinne
- 20: Absatz
- 21: Noppen
- 22: Deckel
- 23: Öffnung
- 24: Deckelflansch

## Patentansprüche

1. Kraftstoffbehälter aus Kunststoff, insbesondere Kfz-Tank aus Kunststoff, mit einer oder mehreren Schweißnähten (2) als Nahtstellen des Behälterkörpers und/oder als Verbindungs- oder Dichtungsnähte zwischen der Behälterwandung (3) im Bereich von Öffnungen (23) und mit dieser verschweißten Deckeln (22) oder Anschlusselementen, **dadurch gekennzeichnet, dass** zumindest einige der Schweißnähte (2) zumindest teilweise mit einem sich in Längsrichtung dieser erstreckenden Kanal (10) durchsetzt sind, der be- und entlüftbar ist.

2. Kraftstoffbehälter nach Anspruch 1, **dadurch gekennzeichnet, dass** der Kanal (10) vorzugsweise jeweils endseitig Anschlüsse (11, 12) zur Be- oder Entlüftung aufweist.

3. Kraftstoffbehälter nach Anspruch 2, **dadurch gekennzeichnet, dass** die Anschlüsse mit Be- oder Entlüftungsventilen versehen sind.

4. Kraftstoffbehälter nach einem der Ansprüche 1 bis 3, **dadurch gekennzeichnet, dass** dieser mehrschichtig mit wenigstens einer in dessen Wandung vollständig eingebetteten Barriereschicht für Kohlenwasserstoffe ausgebildet ist.

5. Kraftstoffbehälter nach einem der Ansprüche 1 bis 4, welcher durch Extrusionsblasen eines mehrschichtigen Vorformlings erhalten wurde, in dessen Wandung wenigstens eine Barriereschicht für Kohlenwasserstoffe vollständig eingebettet ist, **dadurch gekennzeichnet, dass** der Kanal (10) durch Ausnehmungen in den Quetschkanten der Blasform geformt wurde.

6. Kraftstoffbehälter nach einem der Ansprüche 1 bis 4, **dadurch gekennzeichnet, dass** dieser aus zwei miteinander verschweißten Halbschalen (17) erhalten wurde, wobei die Halbschalen (17) jeweils an Verbindungsflanschen miteinander verschweißt sind, wobei in wenigstens einem Verbindungsflansch wenigstens eine den Kanal (10) bildende nutförmige Ausnehmung vorgesehen ist.

7. Kraftstoffbehälter nach einem der Ansprüche 1 bis 4, **dadurch gekennzeichnet, dass** dieser aus zwei miteinander verschweißten Halbschalen (17) erhalten wurde, wobei die Halbschalen (17) jeweils an Verbindungsflanschen miteinander verschweißt sind, in denen jeweils paarweise den Kanal (10) bildende nutförmige Ausnehmungen vorgesehen sind.

8. Kraftstoffbehälter nach Anspruch 1, **dadurch gekennzeichnet, dass** dieser aus zwei stirnseitig miteinander verschweißten Halbschalen (17) erhalten wurde, wobei wenigstens ein Kanal (10) zwischen zwei umlaufenden Absätzen (20) der Halbschalen (17) freigehalten ist.

9. Kraftstoffbehälter nach einem der Ansprüche 6 bis 8, **dadurch gekennzeichnet, dass** die Halbschalen (17) durch Auftrennen eines blasgeformten Behälters erhalten wurden.

10. Kraftstoffbehälter nach einem der Ansprüche 1 bis 9, **dadurch gekennzeichnet, dass** die Nahtstelle des Behälterkörpers jeweils abschnittsweise mit einem Kanal (10) durchsetzt ist, wobei mehrere Kanalabschnitte mit einer gemeinsamen Entlüftungsleitung kommunizieren.

11. Kraftstoffbehälter nach einem der Ansprüche 1 bis 10, **dadurch gekennzeichnet, dass** eine Entlüftung wenigstens eines Kanals über ein Filterelement erfolgt, vorzugsweise über ein dem Behälter zugeordnetes Aktivkohlefilter.

12. Kraftstoffbehälter nach einem der Ansprüche 1 bis 11, **dadurch gekennzeichnet, dass** Mittel zur Druckbelüftung wenigstens eines Kanals (10) vorgesehen sind.

## Claims

1. A fuel container of plastic material, in particular a motor vehicle tank of plastic material, comprising one or more welded seams (2) as seam locations of the container body and/or as connecting or sealing seams between the container wall (3) in the region of openings (23) and covers (22) or connecting elements welded thereto, **characterised in that** at least some of the welded seams (2) are at least partially penetrated by a duct (10) which extends in the longitudinal direction thereof and which can be filled with and vented of air.

2. A fuel container according to claim 1 **characterised in that** the duct (10) preferably has at each end respective connections (11, 12) for introducing air or venting same.

3. A fuel container according to claim 2 **characterised in that** the connections are provided with air intake or venting valves.

4. A fuel container according to one of claims 1 to 3 **characterised in that** it is of a multi-layer structure having at least one barrier layer for hydrocarbons, which is completely embedded in the container wall.

5. A fuel container according to one of claims 1 to 4 which was produced by extrusion blow molding of a multi-layer preform, in the wall of which at least one barrier layer for hydrocarbons is completely embedded, **characterised in that** the duct (10) was formed by openings in the squeeze edges of the blow molding mold.

6. A fuel container according to one of claims 1 to 4 **characterised in that** it was produced from two shell portions (17) which are welded together, wherein the shell portions are respectively welded together at connecting flanges, and wherein at least one groove-shaped opening forming the duct (10) is provided in at least one connecting flange.

7. A fuel container according to one of claims 1 to 4 **characterised in that** it was produced from two shell portions (17) which are welded together, wherein the shell portions (17) are respectively welded together at connecting flanges, in each of which are provided in pairs groove-shaped openings forming the duct (10).

8. A fuel container according to claim 1 **characterised in that** it was produced from two shell portions (17) welded together at their ends, wherein at least one duct (10) is kept free between two peripherally extending steps (20) of the shell portions (17).

9. A fuel container according to one of claims 6 to 8 **characterised in that** the shell portions (17) were obtained by cutting open a blow-molded container.

10. A fuel container according to one of claims 1 to 9 **characterised in that** the seam location of the container body is respectively penetrated in a portion-wise manner by a duct (10) wherein a plurality of duct portions communicate with a common venting conduit.

11. A fuel container according to one of claims 1 to 10 **characterised in that** venting of at least one duct is effected by way of a filter element, preferably by way of an activated carbon filter associated with the container.

12. A fuel container according to one of claims 1 to 11 **characterised in that** there are provided means for pressure filling at least one duct (10) with air.

## Revendications

1. Réservoir de carburant en matière plastique, notamment réservoir en matière plastique pour des véhicules automobiles, avec une ou plusieurs soudures (2) servant de jointures du corps du récipient et/ou de joints de liaison ou d'étanchéité entre la paroi du réservoir (3) dans la zone d'ouvertures (23) et des couvercles (22) ou des éléments de raccordement soudés à ladite paroi, **caractérisé en ce qu'**au moins certaines soudures (2) sont traversées, au moins en partie, par un canal (10) s'étendant dans le sens longitudinal de celles-ci et pouvant être ventilé et aéré.

2. Réservoir de carburant selon la revendication 1, **caractérisé en ce que** le canal (10) présente de préférence à chaque fois des raccords (11, 12) côté extrémité pour la ventilation ou l'évacuation d'air.

3. Réservoir de carburant selon la revendication 2, **caractérisé en ce que** les raccords sont munis de clapet d'aération ou d'évacuation d'air.

4. Réservoir de carburant selon l'une quelconque des revendications 1 à 3, **caractérisé en ce que** celui-ci est réalisé en plusieurs couches, avec au moins une couche de barrage, noyée dans sa paroi, pour des hydrocarbures.

5. Réservoir de carburant selon l'une quelconque des revendications 1 à 4, lequel est-obtenu par extrusion soufflage d'une préforme multicouches, dont au moins une couche de barrage pour des hydrocarbures est noyée dans sa paroi, **caractérisé en ce que** le canal (10) est formé par des évidements dans les bords de compression du moule de soufflage.

6. Réservoir de carburant selon l'une quelconque des revendications 1 à 4, **caractérisé en ce que** celui-ci est obtenu à partir de deux demi-coques (17) soudées ensemble, sachant que les demi-coques (17) sont à chaque fois soudées ensemble au niveau de brides de liaison, sachant qu'il est prévu, dans au moins une bride de liaison, au moins un évidement en forme de rainure formant le canal (10).

7. Réservoir de carburant selon l'une quelconque des revendications 1 à 4, **caractérisé en ce que** celui-ci est obtenu à partir de deux demi-coques (17) soudées ensemble, sachant que les demi-coques (17) sont à chaque fois soudées ensemble au niveau de brides de liaison, dans lesquelles it est prévu à chaque fois, par paire, des évidements en forme de rainure formant le canal (10).

8. Réservoir de carburant selon la revendication 1, **caractérisé en ce que** celui-ci est obtenu à partir de deux demi-coques (17) soudées ensemble côté face, sachant qu'au moins un canal (10) est dégagé entre deux décrochements (20) circulaires des demi-coques (17).

9. Réservoir de carburant selon l'une quelconque des revendications 6 à 8, **caractérisé en ce que** les demi-coques (17) sont obtenues par séparation d'un récipient moulé-soufflé.

10. Réservoir de carburant selon l'une quelconque des revendications 1 à 9, **caractérisé en ce que** la jointure du corps du récipient est respectivement traversée par section par un canal (10), sachant que plusieurs sections du canal communiquent avec une conduite d'évacuation d'air commune.

11. Réservoir de carburant selon l'une quelconque des revendications 1 à 10, **caractérisé en ce que** l'évacuation de l'air d'au moins un canal s'effectue par le biais d'un élément filtre, de préférence, par le biais d'un filtre à charbon actif affecté au récipient.

12. Réservoir de carburant selon l'une quelconque des revendications 1 à 11, **caractérisé en ce que** des moyens sont prévus pour aérer par insufflation au moins un canal (10).
